# EUROPEAN PATENT SPECIFICATION

(11) **EP 4 575 698 B1**
(45) Date of publication and mention of the grant of the patent: **07.10.2026**
(21) Application number: 23219062.9
(22) Date of filing: 21.12.2023
(51) Int. Cl.: G05D 1/617

(54) **CONTROLLING A MINING MACHINE IN PROXIMITY OF A SAFETY GATE**
STEUERUNG EINER BERGBAUMASCHINE IN DER NÄHE EINES SICHERHEITSTORS
COMMANDE D'UNE MACHINE D'EXPLOITATION MINIÈRE À PROXIMITÉ D'UNE PORTE DE SÉCURITÉ

(43) Date of publication of application: 25.06.2025
(73) Proprietor: Sandvik Mining and Construction Oy, 33330 Tampere (FI)
(72) Inventor: SNELLMAN, Olli, 33330 Tampere (FI); OSBORNE, Ty, 33330 Tampere (FI)
(74) Representative: Sandvik

(56) References cited:
- EP-A1- 4 270 133
- WO-A2-2011/051558
- US-A1- 2017 351 264

## Description

### TECHNICAL FIELD

Various example embodiments generally relate to the field of mining machines. Some example embodiments relate to controlling speed of mining machines in proximity of a safety gate when a connection to an external safety gate is lost.

### BACKGROUND

In various applications, such as for example underground mining, it may be desired automate operations of mining machines such as drill rigs, mobile bolter machines, or loaders. Automated mining machines may be configured to operate autonomously at an isolated area in order to prevent accidents.

EP 4 270 133 A1 discloses a mining vehicle which is connected to a safety system. The mining vehicle operates in an area where sub areas are separated by safety gates.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: measure a quantity associated with a relative distance between the mining machine and a safety gate, in response to determining that the mining machine has lost a network connection to an external safety system; and cause the mining machine to slow down or stop, in response to determining that the measured quantity is indicative of the mining machine being located within a proximity threshold from the safety gate.

According to a second aspect, a mining machine is disclosed. The mining machine may comprise: at least one processor; and at least one memory including computer program code, the at least one memory and the computer program code configured to, with the at least one processor, cause the mining machine at least to: measure a quantity associated with a relative distance between the mining machine and a safety gate, in response to determining that the mining machine has lost a network connection to an external safety system; and cause the mining machine to slow down or stop, in response to determining that the measured quantity is indicative of the mining machine being located within a proximity threshold from the safety gate.

According to a third aspect, a safety gate is disclosed. The safety gate may comprise: at least one processor; and at least one memory including computer program code, the at least one memory and the computer program code configured to, with the at least one processor, cause the safety gate at least to: measure a quantity associated with a relative distance between a mining machine and the safety gate, in response to determining that the mining machine has lost a network connection to an external safety system; and cause the mining machine to slow down or stop, in response to determining that the measured quantity is indicative of the mining machine being located within a proximity threshold from the safety gate.

According to a fourth aspect, a method for controlling a mining machine is disclosed. The method may comprise: measuring a quantity associated with a relative distance between the mining machine and a safety gate, in response to determining that the mining machine has lost a network connection to an external safety system; and causing the mining machine to slow down or stop, in response to determining that the measured quantity is indicative of the mining machine being located within a proximity threshold from the safety gate.

According to a fifth aspect, an apparatus for controlling a mining machine is disclosed. The apparatus may comprise: means for measuring a quantity associated with a relative distance between the mining machine and a safety gate, in response to determining that the mining machine has lost a network connection to an external safety system; and means for causing the mining machine to slow down or stop, in response to determining that the measured quantity is indicative of the mining machine being located within a proximity threshold from the safety gate.

According to a sixth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: measure a quantity associated with a relative distance between the mining machine and a safety gate, in response to determining that the mining machine has lost a network connection to an external safety system; and cause the mining machine to slow down or stop, in response to determining that the measured quantity is indicative of the mining machine being located within a proximity threshold from the safety gate.

According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining machine;
FIG. 2 illustrates an example of a mining machine communicatively coupled to an external safety system;
FIG. 3 illustrates an example of a mining machine operating in an isolated area of a mine;
FIG. 4 illustrates an example proximity thresholds with respect to a safety gate;
FIG. 5 illustrates an example of a method for locally controlling a mining machine in proximity of a safety gate;
FIG. 6 illustrates an example of a method for externally controlling a mining machine in proximity of a safety gate;
FIG. 7 illustrates an example of an apparatus configured to practise one or more example embodiments; and
FIG. 8 illustrates an example of a method for controlling a mining machine.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Autonomous mining machines may be configured to operate at isolated areas protected by safety gates. A safety gate may comprise a physical access barrier for restricting access by mining machines to an isolated area and preventing unauthorized personnel from entering the isolated area when one or more mobile mining machines are operating within the isolated area. A safety gate may further comprise at least one detection device for detecting people and/or vehicles entering and/or exiting the isolated area. A detection device may comprise, for example, a light curtain, or some other suitable detection device. At least some of the isolated areas may be isolated by their respective separating safety gates, enabling autonomous operation of one or more mining vehicles within the isolated area.

A mining machine may comprise any type of equipment used in the extraction process of metals or minerals from the earth. A mining machine may be a mobile mining machine, for example a mobile autonomous or semi-autonomous mining machine. A mobile mining machine may be configured to move, e.g., within or near a mine, in order to perform a task, such as drilling, bolting, or transporting materials. The term mine herein is intended to include a variety of underground or surface excavation worksites.

Safety gates may be used in a variety of environments for preventing access to certain areas or to control the flow of people or machines through a particular space. Mining machines operating autonomously inside an area isolated by safety gates may be configured to communicate their position to an external safety system, for example to enable the mining machines to be remotely controlled to prevent any safety breaches or accidents. The external safety system may be configured to communicate with a mining machine via a network connection, for example to ascertain the position of the mining machine relative to a safety gate. The exact communication methods may vary but in general it may be desired to provide a stable network connection between the mining machine and the external safety system.

However, such connections might not always be reliable due to several reasons including, for example, interference from other devices operating in the mine or environmental conditions within the mine. Under such circumstances where the network connection becomes lost, the inability of the external safety system to determine whether the mining machine is still within the isolated area presents a significant safety risk.

Mining machines may be therefore configured to stop when the network connection to the external safety system is lost, in order to avoid safety breaches or accidents when a mining machine is not under control of the external safety system. In order to enable mining machines to continue operation even if the network connection were temporarily lost, the mining machines and safety gates may be equipped with safety classified modules, for example to establish a proximity detection and collision avoidance system that is not dependent on the network connection. This way, a mining machine operating in an autonomous operating mode may be stopped, for example with an onboard collision avoidance system, even without the network connection.

Example embodiments of the present disclosure improve safety by enabling a mining machine to be controlled in proximity of safety gates even without a network connection to an external safety system. An apparatus, for example a controller of the mining machine or a controller of the safety gate, may be configured to measure a quantity associated with a relative distance between the mining machine and a safety gate. The apparatus may be configured to determine that a network connection between the mining machine and the external safety system has been lost. The apparatus may be configured to measure the quantity associated with the relative distance between the mining machine and the safety gate, in response to determining that the mining machine has lost the network connection to the external safety system. The measured quantity may be for example the signal strength of a radio signal received from the mining machine or the safety gate, depending on at which side the control functionality is provided. The apparatus may be configured to control speed of the mining machine, for example to cause the mining machine to slow down or stop, in response to determining that the measured quantity indicates the mining machine to be located within a proximity threshold from the safety gate. The proximity threshold may for example comprise a preconfigured level of the received signal strength. The apparatus may be therefore configured to cause the mining machine to slow down or stop when the mining machine has violated the proximity threshold. This provides the benefit of improving safety, while enabling the mining machine to continue autonomous operation despite interruptions in the network connection to the external safety system.

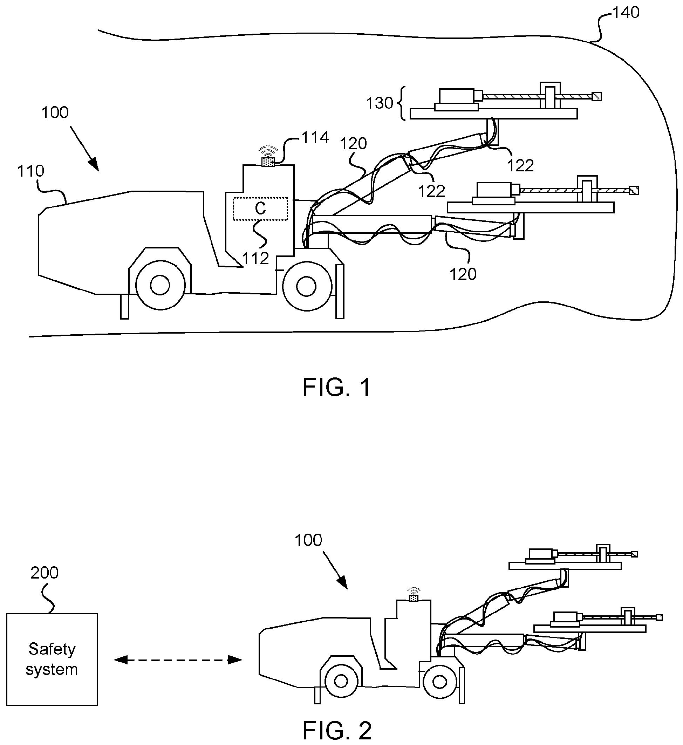

FIG. 1 illustrates an example of a mining machine. Even though underground drill rig 100 is used as an example of a mining machine, it is appreciated that the disclosed example embodiments may be applied to other types of mining machines as well, for example mobile bolter machines or loaders. Underground drill rig 100 may comprise a movable carrier 110 and at least one boom 120 connected to movable carrier 110. Movable carrier 110 may comprise equipment for moving or stabilising underground drill rig 100, such as for example a motor, wheels, or stabilizer jack(s). Even though two booms 120 have been illustrated in FIG. 1, underground drill rig 100 may generally comprise one or a plurality (e.g., two, three, four,...) of booms 120.

A tool, represented throughout the description by drilling unit 130, may be coupled to a distal end portion of boom 120. Drilling unit 130 may comprise a feeding system configured to keep a drill bit of drilling unit 130 in contact with the drilling face, in this example tunnel surface 140, and to enable a drill rod to move along a feed beam during drilling. Boom(s) 120 may comprise a plurality of boom parts coupled to each other, movable carrier 110, and/or drilling unit 130 by joint(s) 122. Controllable joints 122 enable drilling unit 130 to be placed at a desired position and orientation with respect to the drilling face. Other examples of tools include a gripper, which may be configured to hold a mesh when meshing tunnel surface 140, and a bolter, which may be configured to mount bolts to tunnel surface 140, for example for mounting meshes to tunnel surface 140.

Underground drill rig 100 may comprise a controller (C) 112. Controller 112 may be configured to control various functions of underground drill rig 100, such as for example navigation, motion (e.g., driving), or drilling. Controller 112 may for example comprise a navigation application configured to control motion of underground drill rig 100, for example movable carrier 110, or other component(s) or tool(s) of underground drill rig 100, such as for example boom(s) 120 or drilling unit 130. Controller 112 may comprise control circuitry for performing functionality of controller 112.

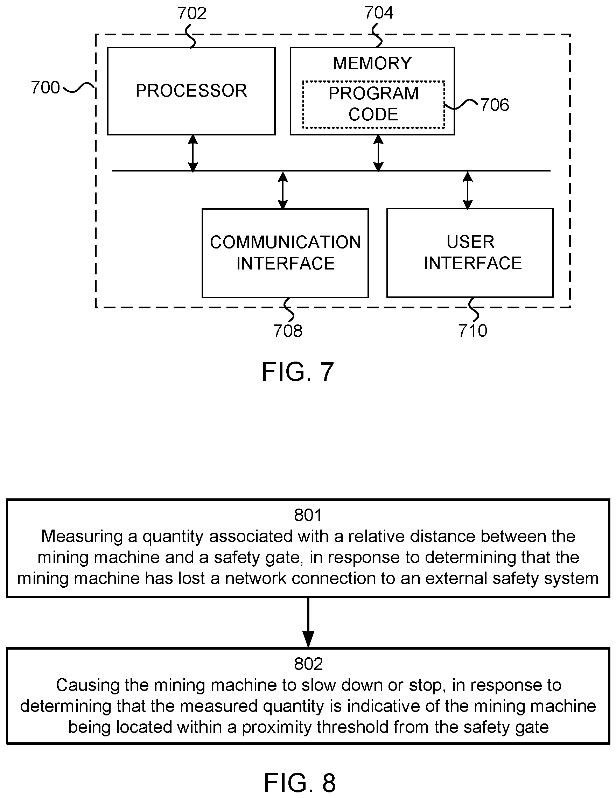

Controller 112 may be provided at underground drill rig 100 for example as an integrated circuit (IC), or, as a software application residing on at least one memory and being executable by a processor. Controller 112 may be therefore a control apparatus or a software component executable by a processor. An example of an apparatus suitable for implementing controller 112 is provided in FIG. 7. Controller 112 may comprise, or be communicatively coupled to, various functions, blocks, or applications for controlling functionality of underground drill rig 100.

Underground drill rig 100, may comprise communication circuitry 114, which may be mounted at various parts of underground drill rig 100, for example movable carrier 110. The communication circuitry may comprise, for example, wireless radio transmitter and/or receiver circuitry coupled to one or more antennas, in order to enable communication circuitry to wirelessly transmit and/or receive information, for example to/from an external safety system or a safety gate. Communication circuitry 114 may be configured to provide a wireless communication interface between underground drill rig 100 and the external safety system, or, between underground drill rig 100 and the safety gate, e.g., communication circuitry associated therewith. Examples of a suitable wireless communication interfaces for implementing the wireless communication links described herein include any short range wireless communication systems, such as the 802.11 series of standards specified by IEEE (Institute of Electrical and Electronics Engineers), Bluetooth^{®} Low Energy (LE), or ultra wideband (UWB) technology.

Underground drill rig 100 may be an automated mining machine. An automated mining machine, operating in an automatic mode may be configured to, for example, receive a task to be performed, perceive the environment of the mining machine (e.g., mining vehicle) and autonomously perform the task while taking the environment into account. An automated mining machine operating in an automatic mode may be configured to operate independently but may be taken under external control at certain operation areas or conditions, such as during states of emergencies.

Underground drill rig 100 may communicatively coupled to safety system 200, which may be external to underground drill rig 100, as illustrated in FIG. 2. Safety system 200 may be therefor referred to as an external safety system. Safety system 200 may be for example provided at a server located remote from underground drill rig 100, for example outside the mine. Information may be exchanged between safety system 200 and underground drill rig 100 over a communication interface including any suitable wireless connection. Examples of suitable communication interfaces are described with reference to FIG. 7.

As noted above, the example embodiments may be also applied to other types of mining machines such as loaders. A loader may comprise a movable carrier and at least one boom connected to the movable carrier. The loader may comprise a bucket, for example coupled to boom 120. The movable carrier may comprise equipment for moving the loader, such as for example a motor and wheels. The movable carrier may be configured to move autonomously or it may be configured to be controlled by a human operator, either remotely or locally at the loader. The loader may comprise a controller, for example similar to controller 112. The boom(s) and the bucket may be configured to be controlled, for example, by the controller, or with mechanical switches or manual controllers installed at a user interface of the loader. The controller may be also configured to control other aspects of loader 100, such as parts of movable carrier 110 like the motor and wheels, for example to cause the loader to move within a mine and to transport material from one location to another.

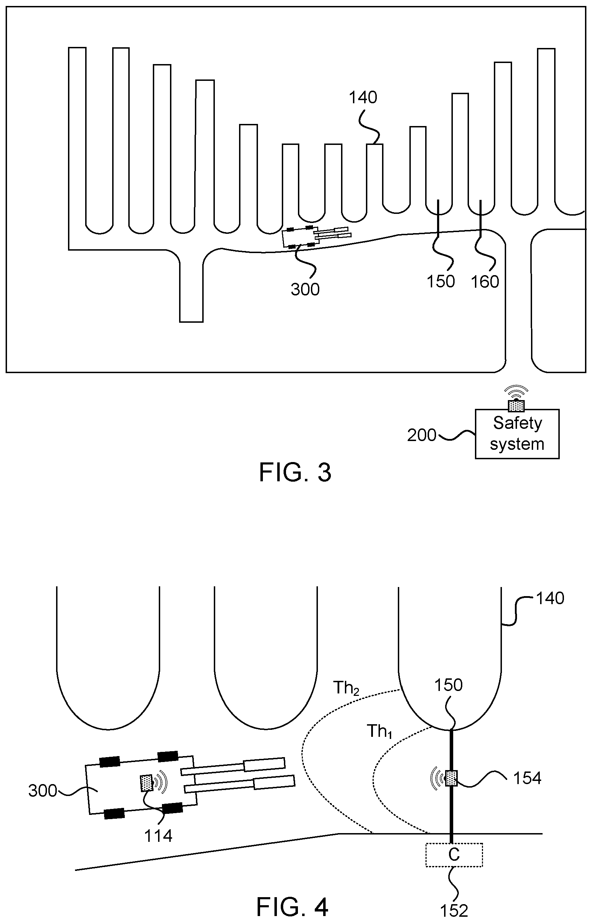

FIG. 3 illustrates an example of a mining machine operating in an isolated area of a mine. Mining machine 300 may comprise, for example, underground drill rig 100, or any other type of mining machine. The isolated area of the mine may be isolated with at least one access gate 160, which may be configured to prevent unauthorized access to the isolated area, or, to warn about entry to the isolated area, e.g., by illumination of floor, wall(s), or roof of the mine at the location of access gate 160. Access gate 160 may be therefore configured to restrict access to the isolated area. At least one safety gate 150 may be provided at the isolated area, for example near access gate 160, or integrated within access gate 160.

Safety gate 150 may be configured to control, or enable controlling, movement of mining machine 300 in proximity of safety gate 150, as will be further described below. Mining machine 300 may be configured to communicate with safety system 200, for example to indicate the position of mining machine 300 to safety system 200. Safety system 200 may be configured to control movement of mining machine 300 over a network connection, for example to prevent mining machine 300 from exiting the isolated area.

FIG. 4 illustrates an example of proximity thresholds with respect to a safety gate. Mining machine 300, in this example communication circuitry 114, may be configured to communicate with safety system 200. Communication circuitry 114 may be further configured to communicate with safety gate 150, e.g., respective communication circuitry 154 associated therewith, for example to receive a radio signal configured to enable controller 112 to estimate the distance between mining machine 300 and safety gate 150. Communication circuitry 154 may be mechanically coupled to, or configured to be coupled to, safety gate 150. Alternatively, or additionally, communication circuitry 114 may be configured to transmit a radio signal to enable safety gate 150, e.g., a controller 152 associated therewith, to estimate the distance between mining machine 300 and safety gate 150. Controller 152 may be mechanically or communicatively coupled to, or configured to be coupled to, safety gate 150, for example communication circuitry 154.

One or more proximity thresholds may be configured for controlling speed of mining machine 300. For example, a first proximity threshold (Th₁) may be configured to trigger stopping mining machine 300. A second proximity threshold (Th₂) may be configured to trigger slowing down mining machine 300. The proximity threshold(s) may be therefore configured for controlling speed of mining machine 300 in proximity of safety gate 150. The first proximity threshold may be associated with position(s) which are closer to safety gate 150 than position(s) associated the second proximity threshold. As illustrated in FIG. 4. Even though some example embodiments use two proximity thresholds, it is also possible to apply more than two proximity thresholds, for example to enable to cause gradual slowing of mining machine 300 when it approaches safety gate 150.

The proximity threshold(s) may comprise threshold distance(s). It is however possible to apply other type of proximity thresholds. For example, the proximity threshold(s) may be set in terms of received signal strength of the radio signal communicated between mining machine 300 and safety gate 150 (e.g., communication circuitries 114 and 154). The received signal strength may be associated with the relative distance between mining machine 300 and safety gate 150 because of attenuation of the radio signal during propagation of the radio signal between mining machine 300 and safety gate 150.

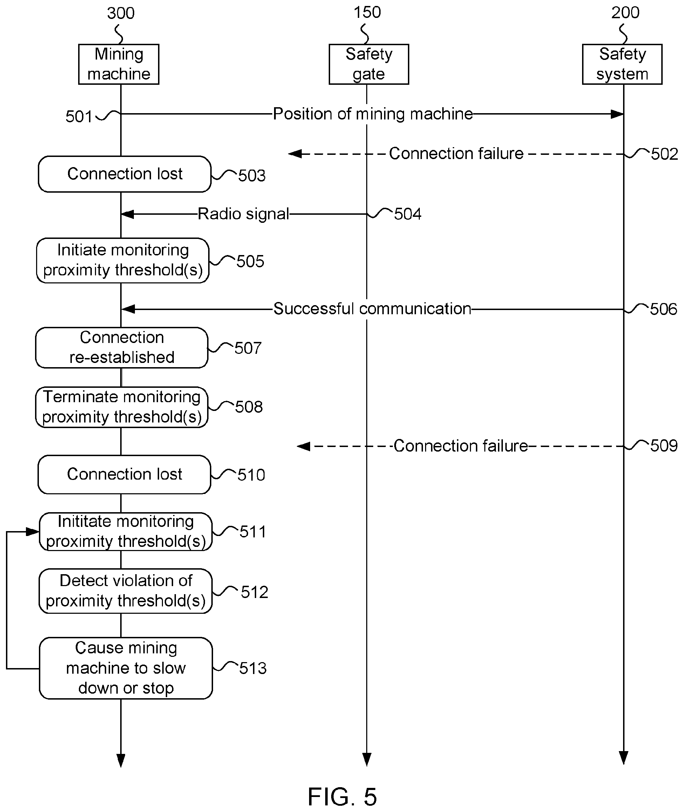

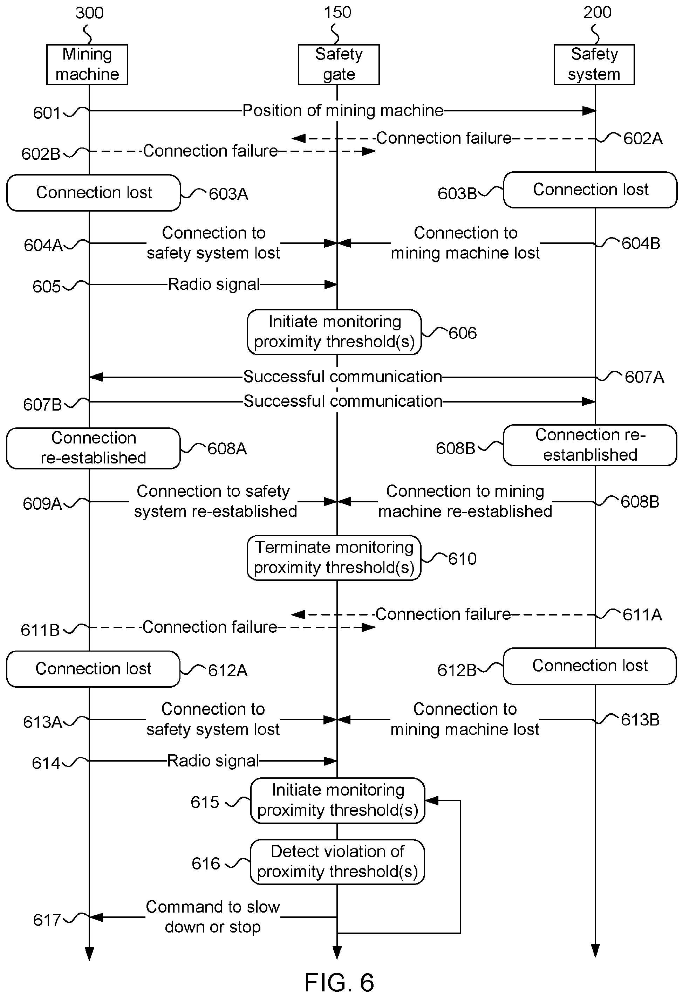

It is noted that controlling the speed of mining machine 300 may be implemented locally at mining machine 300 (e.g. by controller 112), or external to mining machine 300, for example by safety gate 150 (e.g., by controller 152), as will be further described with reference to FIG. 5 and FIG. 6. A controller responsible for monitoring violation of the proximity threshold(s) may or may not be configured to transform the received signal strength to an estimate of the distance between mining machine 300 and safety gate 150.

It is further noted that even though some operations of FIG. 5 and FIG. 6 are described as being configured to be performed by mining machine 300, the operations of mining machine 300 may be configured to be implemented by particular component(s) of mining machine 300, for example controller 112 or communication circuitry 114, or an apparatus (e.g., a wireless communication tag) mechanically coupled to, or configured to be coupled to, mining machine 300. For example, communication circuitry 114 may be configured to communicate with other devices such as safety gate 150 and/or safety system 200 by transmitting and/or receiving signals or messages.

Even though some operations have been described as being configured to be performed by safety gate 150, the operations of safety gate 150 may be configured to be performed by particular component(s) of safety gate 150, for example controller 152 or communication circuitry 154, or an apparatus (e.g., a wireless communication tag) mechanically coupled to, or configured to be coupled to, safety gate 150. For example, controller 152 and/or communication circuitry 154 may be configured to perform operations similar to controller 112 and/or communication circuitry 114 of mining machine 300.

FIG. 5 illustrates an example of a method for locally controlling a mining machine in proximity of a safety gate. According to examples of FIG. 5, mining machine 300 may be configured to locally control its speed based on a radio signal received from safety gate 150, when network connection to safety system 200 is lost. Mining machine 300, for example controller 112, might be preconfigured with a safety configuration that would cause mining machine 300 to stop when mining machine 300 loses the network connection to safety system 200. In order to enable mining machine 300 to continue operation without the network connection, mining machine 300 may be configured to overrule such a safety configuration. Mining machine 300 may be configured to overrule the safety configuration at any suitable time during the procedure of FIG. 5, for example upon detecting that the network connection to safety system 200 is lost. Overruling the safety configuration enables to prevent mining machine 300 from being unnecessarily stopped and to continue autonomous operation while monitoring its distance to safety gate 150.

At operation 501, mining machine 300 may be configured to transmit an indication of the position of mining machine 300 to safety system 200. The network connection between mining machine 300 and safety system 200 may be therefore configured for communicating the position of mining machine 300 to safety system 200. Mining machine 300 may be configured to communicate its position to safety system 200 at a preconfigured schedule, for example periodically (e.g., at a time interval of 10 s). This enables safety system 200 to monitor the position of mining machine 300 and to control speed of mobile machine 300, for example to prevent mining machine from exiting the isolated area. Mining machine 300 may be therefore configured to repeat operation 501, for example throughout the procedure of FIG. 5.

At operation 502, a connection failure may occur between mining machine 300 and safety system 200. Safety system 200, for example communication circuitry 154, may be, for example, configured to transmit an acknowledgement message to the indication of the position of mining machine 300 received by safety system 200 at operation 501. Alternatively, or additionally, safety system 200 might be configured to transmit, e.g., periodically, test messages in order to enable mining machine 300 to determine whether it is still connected to safety system 200. At operation 502, the network connection fails and the message transmitted by safety system 200 never reaches mining machine 300.

At operation 503, mining machine 300 may be configured to determine that it has lost the network connection to safety system 200, for example in response to determining that it has not received a message (e.g., an acknowledgement or test message) that mining machine 300 is expecting from safety system 200.

At operation 504, safety gate 150 may be configured to transmit a radio signal, for example a short-range wireless communication signal. It is noted that safety gate 150 may be configured to repeat transmitting the radio signal, for example throughout the procedure of FIG. 5. Safety gate 150 may be for example configured to transmit the radio signal continuously or periodically. The radio signal may comprise a beacon signal. The radio signal may be configured to enable at least estimation of the distance to safety gate 150, when received by another device such as mining machine 300.

At operation 505, mining machine 300 may be configured to initiate monitoring the proximity threshold(s). For example, mining machine 300 may be configured to initiate monitoring a quantity associated with the relative distance between mining machine 300 and safety gate 200. The quantity may comprise, for example, the received signal strength of the radio signal received from safety gate 150 or an estimated distance between mining machine 300 and safety gate 150. As noted above, the proximity threshold(s) may be provided as threshold distance(s) (e.g., in metres) or threshold(s) for the received signal strength (e.g., in dBm). Monitoring the quantity may comprise measuring the quantity, for example periodically. Measuring the quantity may comprise determining a value of the quantity by an instrument or receiving a value of the quantity from another device. For example, controller 112 may be configured to measure the quantity by determining a value of the quantity in data received from another device, for example an instrument coupled to mining machine 300.

In case of distance based threshold(s), mining machine 300 may be configured to estimate the distance between mining machine 300 and safety gate 150 based on the received signal strength, for example based on a preconfigured mapping between received signal strength values and respective distances. In this case, monitoring the proximity threshold(s) may comprise comparing the estimated distance to the distance threshold(s). In case of received signal strength based threshold(s), monitoring the proximity threshold(s) may comprise comparing the received signal strength to the threshold(s) for received signal strength directly.

Initiating the monitoring of the quantity (e.g., distance or received signal strength) may be in response to determining, by mining machine 300, that it has lost the network connection to safety system 200. This provides the benefit of avoiding unnecessary power consumption, because the monitoring may be initiated only when needed.

At operation 506, safety system 200 may successfully transmit a message (e.g., an acknowledgement or test message) to mining machine 300.

At operation 507, mining machine 300 may be configured to determine that the network connection to safety system 200 has been re-established, for example in response to reception (e.g., successful decoding) of the communication at operation 506.

At operation 508, mining machine 300 may be configured to terminate monitoring the proximity threshold(s), e.g., the quantity associated with the relative distance between mining machine 300 and safety gate 150. This may be in response to determining, by mining machine 300, that it has re-established the network connection to safety system 200 (cf., operation 507). This provides the benefit of avoiding unnecessary monitoring of the proximity threshold(s) when mining machine 300 is under control of safety system 200.

At operations 509, 510, and 511, a connection failure may again occur between mining machine 300 and safety system 200 and mining machine 300 may therefore determine that the network connection to safety system 200 has been lost. Mining machine 300 may again initiate monitoring of the proximity threshold(s). Operations 509, 510, and 511 may be similar to operations 502, 503, and 505, respectively.

At operation 512, mining machine 300 may be configured to detect violation of the proximity threshold(s). Note that mining machine 300 may be configured to monitor one or more proximity thresholds, for example a single proximity threshold (cf., Th₁) configured to trigger stopping mining machine 300, or two proximity thresholds (cf., Th₂, Th₁) configured to trigger slowing down and stopping mining machine 300, respectively.

At operation 513, mining machine 300 (e.g., controller 112) may be configured to cause mining machine 300 to slow down or stop. This may be in response to determining, by mining machine 300, that the quantity measured at operation 511 is indicative of mining machine 300 being located within a proximity threshold (e.g., Th₁ or Th₂) from safety gate 150, for example the estimated distance being below a respective threshold or the received signal strength being above a respective threshold. For example, mining machine 300 may be configured to determine to stop, if the measured quantity indicates mining machine 300 to be within the first proximity threshold (Th₁). Mining machine 300 may configured to determine to slow down, if the measured quantity indicates mining machine 300 to be within the second proximity threshold (Th₂) and not within the first proximity threshold (Th1).

When implementing operations 511 to 513 by controller 112, controller 112 may be configured to cause mining machine 300 to stop or slow down by transmitting control instructions to relevant component(s) of mining machine 300, e.g., the motor, to control speed of mining machine 300 accordingly.

As noted above, mining machine 300 may be configured to monitor a single proximity threshold. In this case, mining machine 300 might not be configured with the second proximity threshold (Th2). When mining machine 300 is configured with more than one proximity threshold, in this example the first and second proximity thresholds (Th₁, Th₂), mining machine 300 may be configured to first initiate monitoring the second proximity threshold (Th₂) (cf., operation 511) and cause mining machine 300 to slow down (cf., operation 513), in response to determining that the second threshold (Th₂) is violated (cf., operation 512). Mining machine 300 may be then configured to move back to execution of operation 511 to continue the monitoring with the first threshold (Th₁) and cause mining machine 300 to stop (cf., operation 513), in response to determining that the first proximity threshold (Th₁) is violated (cf., operation 512).

The procedure of FIG. 5 therefore enables mining machine 300, e.g., controller 112, to locally control speed of mining machine 300 such that it is stopped when mining machine 300 is located within the first proximity threshold from safety gate 150. This provides the benefit of enabling to avoid interruptions in the autonomous operation of mining machine 300 due to losing network connection to safety system 200. Optionally, mining machine 300, e.g., controller 112, may be configured to monitor the second proximity threshold (Th₂) in order to slow down mining machine 300 before it reaches the first proximity threshold (Th₁). This provides the benefit of enabling mining machine 300 to operate relatively close to safety gate 150 and still being able to cause mining machine 300 to stop before it exits the isolated area.

FIG. 6 illustrates an example of a method for externally controlling a mining machine in proximity of a safety gate. According to examples of FIG. 6, safety gate 150, e.g. controller 152, may be configured to control speed of mining machine 300 based on a radio signal received from mining machine 300, when network connection between mining machine 300 and safety system 200 is lost.

At operation 601, mining machine 300 may be configured to transmit an indication of the position of mining machine 300 to safety system 200, similar to operation 501.

At operations 602, 603, and 604, a connection failure may occur between mining machine 300 and safety system 200 and information about the connection failure may be indicated to safety gate 150. Operations 602A, 603A, and 604A relate to detecting and indicating the loss of network connection by mining machine 300. Operations 602B, 603B, and 604B relate to detecting and indicating the loss of network connection by safety system 200. Operations 602A, 603A, and 604A may be configured to be performed alternative to operations 602B, 603B, and 604B.

At operation 602A, safety system 200 may be configured to transmit a message (e.g., an acknowledgement or test message) to mining machine 300, for example similar to operation 502. However, mining machine 300 may not receive the communication due to a connection failure.

At operation 603A, mining machine 300 may be configured to determine that it has lost the network connection to safety system 200, for example in response determining that it has not received a message (e.g., an acknowledgement or test message) that mining machine 300 is expecting from safety system 200.

At operation 604A, mining machine 300 may be configured to transmit, to safety gate 150, an indication of having lost the network connection to safety system 200.

At operation 602B, mining machine 300 may be configured to transmit a message (e.g., an indication of its position) to safety system 200. However, due to the connection failure this message may never reach safety system 200.

At operation 603B, safety system 200 may be configured to determine that it has lost the network connection to mining machine 300, for example in response determining that it has not received a message (e.g., the indication of the position of mining machine 300) that safety system 200 is expecting from mining machine 300.

At operation 604B, safety system 200 may be configured to transmit, to safety gate 150, an indication of having lost the network connection to mining machine 300.

At operation 605, mining machine 300 may be configured to transmit a radio signal, for example a short-range wireless communication signal. It is noted that mining machine 300 may be configured to repeat transmission of the radio signal, for example throughout the procedure of FIG. 6. Alternatively, mining machine 300 may be configured to initiate transmission of the radio signal, in response to determining that it has lost the network connection to safety system 200. This provides the benefit of avoiding unnecessary transmission of the radio signal when the network connection is still working. Mining machine 300 may be configured to transmit the radio signal continuously or periodically. The radio signal may be similar to the radio signal of operation 504.

At operation 606, safety gate 150, e.g., a controller 152, may be configured to initiate monitoring the proximity threshold(s), similar to operation 505 described with reference to mining machine 300. Safety gate 150, e.g., communication circuitry 154, may be however configured to receive the radio signal from mining machine 300, for example an apparatus, such as a wireless communication tag, mechanically coupled to mining machine 300.

At operation 607A, safety system 200 may be configured to transmit a message to mining machine. As there is no connection failure, mining machine 300 may successfully receive the communication and determine at operation 608A that the network connection to safety system 200 has been re-established. Accordingly, at operation 609A mining machine 300 may transmit, to safety gate 150, an indication of the re-establishment of the network connection to safety system 200.

Alternatively, or additionally, at operation 607B, mining machine 300 may be configured to transmit a message to safety system 200. As there is no connection failure, safety system 200 may successfully receive the communication and determine at operation 608B that the network connection to mining machine 300 has been re-established. Accordingly, at operation 609B, safety system 200 may transmit, to safety gate 150, an indication of the re-establishment of the network connection to mining machine 300.

At operation 610, safety gate 150 may be configured to terminate monitoring the proximity threshold(s). This may be in response to determining, e.g., based on the indication(s) received at operations 609A, 609B, that the network connection between mining machine 300 and safety system 200 has been re-established.

At operations 611A, 612A, 613A and 611B, 612B, 613B, mining machine 300 and/or safety system 200 may be configured to determine, based on a connection failure, that the network connection between mining machine 300 and safety system 200 is lost and to indicate this to safety gate 150, similar to operations 602A, 603A, 604A and 602B, 603B, 604B.

At operation 614, mining machine 300 may be configured to continue or initiate transmission of the radio signal.

At operation 615, safety gate 150, e.g., controller 152, may be configured to initiate monitoring the proximity thresholds, for example similar to operation 606 or 505.

At operation 616, safety gate 150, e.g., controller 152, may be configured to detect violation of the proximity threshold(s), for example similar to operation 512 described with reference to mining machine 300.

At operation 617, safety gate 150, e.g., controller 152, may be configured to transmit, to mining machine 300, a command to slow down or stop, in response to determining that the quantity measured for monitoring the proximity threshold(s) (cf. operation 615) indicates mining machine 300 to be located within a proximity threshold from safety gate 150. Safety gate 150 may be therefore configured to cause mining machine 300 to slow down or stop by transmitting, e.g., by communication circuitry 154, a respective command to mining machine 300.

Similarly to operations 511, 512, and 513, also safety gate 150 may be configured to monitor one or more proximity thresholds. For example, safety gate 150 may be configured to cause mining machine 300 to stop, if the measured quantity indicates mining machine 300 to be within the first proximity threshold (Th₁) from safety gate 150. Safety gate 150 may be configured to cause mining machine 300 to slow down, if the measured quantity indicates mining machine 300 to be within the second proximity threshold (Th₂) and not within the first proximity threshold (Th₁) from safety gate 150. When safety gate 150 is configured to monitor a single proximity threshold, safety gate may be configured with the first proximity threshold (Th₁) but not the second proximity threshold (Th₂).

When safety gate 150 is configured with more than one proximity threshold, e.g., the first and second proximity thresholds (Th₁, Th₂), safety gate 150 may be configured to first initiate monitoring the second proximity threshold (Th₂) (cf., operation 615) and cause mining machine 300 to slow down by transmission of a respective command (cf., operation 617), in response to determining that the second proximity threshold (Th₂) is violated (cf., operation 616). Safety gate 150 may be then configured to move back to execution of operation 615 to continue the monitoring with the first proximity threshold (Th₁) and cause mining machine 300 to stop by transmission of a respective command (cf., operation 617), in response to determining that the first proximity threshold (Th₁) is violated (cf., operation 616).

The procedure of FIG. 6 therefore enables safety gate 150, e.g., controller 152, to externally control speed of mining machine 300 such that it is caused to slow down when mining machine 300 is within the second proximity threshold (Th₂) and/or stopped when mining machine 300 is within the first proximity threshold (Th₁). The procedure of FIG. 6 therefore provides an alternative implementation for the procedure of FIG. 5 with similar benefits. Furthermore, implementing the control functionality externally provides the benefit of enabling a single entity to control more than one mining machine.

FIG. 7 illustrates an example of an apparatus configured to practise one or more example embodiments. Apparatus 700 may be or comprise a control apparatus, such as for example a server, communicatively coupled to mining machine 300, a control apparatus located at mining machine 300, controller 112, mining machine 300 itself, a control apparatus associated with safety gate 150, controller 152, safety gate 150 itself, or in general any apparatus or system configured to implement the functionality described herein. Although apparatus 700 is illustrated as a single device, it is appreciated that, wherever applicable, functions of apparatus 700 may be distributed to a plurality of physically separate apparatuses.

Apparatus 700 may comprise at least one processor 702. The at least one processor 702 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a specialpurpose computer chip, or the like.

Apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal ) as opposed to a limitation on data storage persistency (e.g., RAM vs. ROM). The at least one memory 704 may be also embodied separate from apparatus 700, for example as a computer readable (storage) medium, examples of which include memory sticks, compact discs (CD), or the like.

When apparatus 700 is configured to implement some functionality, some component and/or components of apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as software components. According to an example embodiment, apparatus 700 comprises a processor or processor circuitry, such as for example a microcontroller, configured by the program code 706, when executed, to execute the embodiments of the operations and functionality described herein. Program code 706 is provided as an example of instructions which, when executed by the at least one processor 702, cause performance of apparatus 700.

For example, controller 112 or 152 may be at least partially implemented as program code 706 configured to cause apparatus 700 to perform functionality of controller 112 or 152. Similarly, transmission or reception of data (e.g., the radio signal or control commands) over an internal or external communication interface of mining machine 300 or safety gate 150 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), a programmable logic controller (PLC), or the like.

Apparatus 700 may comprise a communication interface 708 configured to enable apparatus 700 to transmit and/or receive information. Communication interface 708 may comprise an internal or external communication interface, such as for example a radio interface between mining machine 300 and safety system 200, or between mining machine 300 and safety gate 150 Apparatus 700 may further comprise other components and/or functions such as for example user interface 710 comprising at least one input device and/or at least one output device. The input device may take various forms such as a keyboard, a touch screen, or one or more embedded control buttons. The output device may for example comprise a display, a speaker, or the like. User interface 710 may enable a human operator to monitor various functions and data of apparatus, or the like.

Apparatus 700 may be configured to perform or cause performance of any aspect of the method(s) described herein. Further, a computer program or a computer program product may comprise instructions for causing, when executed by apparatus 700, apparatus 700 to perform any aspect of the method(s) described herein. Further, apparatus 700 may comprise means for performing any aspect of the method(s) described herein. In one example, the means comprises the at least one processor 702, the at least one memory 704 including program code 706 (instructions) configured to, when executed by the at least one processor 702, cause apparatus 700 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 702. Apparatus 700 may comprise means for transmitting or receiving information, for example one or more wired of wireless (e.g. radio) transmitters or receivers, which may be coupled or be configured to be coupled to one or more antennas, or transmitter(s) or receiver(s) of a wired communication interface.

According to a first aspect, apparatus 700 may be configured to control a mining machine. The apparatus may comprise: at least one processor; and at least one memory including computer program code, the at least one memory and the computer program code configured to, with the at least one processor, cause the apparatus at least to: measure a quantity associated with a relative distance between the mining machine and a safety gate, in response to determining that the mining machine has lost a network connection to an external safety system; and cause the mining machine to slow down or stop, in response to determining that the measured quantity is indicative of the mining machine being located within a proximity threshold from the safety gate.

According to an example embodiment of the first aspect, the computer program code is configured to, with the at least one processor, cause the apparatus to: initiate monitoring the quantity associated with the relative distance, in response to determining that the mining machine has lost the network connection to an external safety system; and terminate monitoring of the quantity associated with the relative distance, in response to determining that the mobile mining machine has re-established the network connection to the external safety system.

According to an example embodiment of the first aspect, the computer program code is configured to, with the at least one processor, cause the apparatus to: overrule a safety configuration configured to cause the apparatus to cause the mining machine to stop when the mining machine has lost the network connection to the external safety system.

According to an example embodiment of the first aspect, the network connection is configured to be used for communicating a position of the mining machine to the external safety system.

According to an example embodiment of the first aspect, the computer program code is configured to, with the at least one processor, cause the apparatus to: cause the mining machine to slow down, in response to determining that the measured quantity is indicative of the mining machine being located within a second proximity threshold from the safety gate; and cause the mining machine to stop, in response to determining that the measured quantity is indicative of the mining machine being located within the proximity threshold from the safety gate, wherein the proximity threshold is associated with a position closer to the safety gate than the second proximity threshold.

According to an example embodiment of the first aspect, the quantity comprises a received signal strength of a radio signal communicated between the mining machine and the safety gate.

According to an example embodiment of the first aspect, the radio signal comprises a short-range wireless communication signal.

According to an example embodiment of the first aspect, the computer program code is configured to, with the at least one processor, cause the apparatus to: receive the radio signal from a second apparatus coupled to the safety gate.

According to an example embodiment of the first aspect, the computer program code is configured to, with the at least one processor, cause the apparatus to: receive the radio signal from a second apparatus coupled to the mining machine.

According to an example embodiment of the first aspect, the computer program code is configured to, with the at least one processor, cause the apparatus to: transmit, to the mining machine, a control command to cause the mining machine to slow down or stop.

According to an example embodiment of the first aspect, the second apparatus comprises a wireless communication tag.

According to a second aspect, apparatus 700 may be a mining machine. The mining machine may comprise the apparatus according to example embodiment(s) of the first aspect. For example, the mining machine may comprise at least one processor; and at least one memory including computer program code, the at least one memory and the computer program code configured to, with the at least one processor, cause the mining machine at least to: measure a quantity associated with a relative distance between the mining machine and a safety gate, in response to determining that the mining machine has lost a network connection to an external safety system; and cause the mining machine to slow down or stop, in response to determining that the measured quantity is indicative of the mining machine being located within a proximity threshold from the safety gate.

According to a third aspect, apparatus 700 may be a safety gate. The safety gate may comprise the apparatus according to example embodiment(s) of the first aspect. For example, the safety gate may comprise at least one processor; and at least one memory including computer program code, the at least one memory and the computer program code configured to, with the at least one processor, cause the safety gate at least to: measure a quantity associated with a relative distance between a mining machine and the safety gate, in response to determining that the mining machine has lost a network connection to an external safety system; and cause the mining machine to slow down or stop, in response to determining that the measured quantity is indicative of the mining machine being located within a proximity threshold from the safety gate.

FIG. 8 illustrates an example of a method for controlling a mining machine, according to a fourth aspect of the present disclosure. The method may comprise a computer-implemented method performed by, for example, apparatus 700, such as controller 112 or 152.

At 801, the method may comprise measuring a quantity associated with a relative distance between the mining machine and a safety gate, in response to determining that the mining machine has lost a network connection to an external safety system.

At 802, the method may comprise causing the mining machine to slow down or stop, in response to determining that the measured quantity is indicative of the mining machine being located within a proximity threshold from the safety gate.

According to an example embodiment of the fourth aspect, the method comprises: initiating monitoring the quantity associated with the relative distance, in response to determining that the mining machine has lost the network connection to an external safety system; and terminating monitoring of the quantity associated with the relative distance, in response to determining that the mobile mining machine has re-established the network connection to the external safety system.

According to an example embodiment of the fourth aspect, the method comprises: overruling a safety configuration configured for causing the mining machine to stop when the mining machine has lost the network connection to the external safety system.

According to an example embodiment of the fourth aspect, the network connection is configured to be used for communicating a position of the mining machine to the external safety system.

According to an example embodiment of the fourth aspect, the method comprises: causing the mining machine to slow down, in response to determining that the measured quantity is indicative of the mining machine being located within a second proximity threshold from the safety gate; and causing the mining machine to stop, in response to determining that the measured quantity is indicative of the mining machine being located within the proximity threshold from the safety gate, wherein the proximity threshold is associated with a position closer to the safety gate than the second proximity threshold.

According to an example embodiment of the fourth aspect, the quantity comprises a received signal strength of a radio signal communicated between the mining machine and the safety gate.

According to an example embodiment of the fourth aspect, the radio signal comprises a short-range wireless communication signal.

According to an example embodiment of the fourth aspect, the method comprises: receiving the radio signal from an apparatus coupled to the safety gate.

According to an example embodiment of the fourth aspect, the method comprises: receive the radio signal from an apparatus coupled to the mining machine.

According to an example embodiment of the fourth aspect, the method comprises: transmitting, to the mining machine, a control command to cause the mining machine to slow down or stop.

According to an example embodiment of the fourth aspect, the apparatus comprises a wireless communication tag.

The method may be performed by mining machine 300, controller 112, safety gate 150, or controller 152, for example based on program code 706, when executed by processor 702. Various examples of the methods are explained above with regard to functionalities of mining machine 300, controller 112, safety gate 150, or controller 152, and are therefore not repeated here. It should be understood that example embodiments described may be combined in different ways unless explicitly disallowed.

According to a fifth aspect, an apparatus may comprise means for measuring a quantity associated with a relative distance between a mining machine and the safety gate, in response to determining that the mining machine has lost a network connection to an external safety system; and means for causing the mining machine to slow down or stop, in response to determining that the measured quantity is indicative of the mining machine being located within a proximity threshold from the safety gate. The apparatus may comprise means for performing any example embodiment of the method of the fourth aspect.

According to a sixth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: measure a quantity associated with a relative distance between a mining machine and the safety gate, in response to determining that the mining machine has lost a network connection to an external safety system; and cause the mining machine to slow down or stop, in response to determining that the measured quantity is indicative of the mining machine being located within a proximity threshold from the safety gate. The computer program, the computer program product, or the (non-transitory) computer-readable medium may comprise program instructions which, when executed by an apparatus, cause the apparatus to perform any example embodiment of the method of the fourth aspect.

## Claims

1. An apparatus (700) for controlling a mining machine (100, 300), the apparatus comprising:
at least one processor (702); and
at least one memory (704) including computer program code (706), the at least one memory (704) and the computer program code (706) configured to, with the at least one processor (702), cause the apparatus at least to:
measure a quantity associated with a relative distance between the mining machine (100, 300) and a safety gate (150), in response to determining that the mining machine (100, 300) has lost a network connection to an external safety system (200); and
cause the mining machine (100, 300) to slow down or stop, in response to determining that the measured quantity is indicative of the mining machine (100, 300) being located within a proximity threshold (Th1, Th2) from the safety gate (150).

2. The apparatus (700) according to claim 1, wherein the at least one memory (704) and the computer program code (706) are further configured to, with the at least one processor (702), cause the apparatus to:
initiate monitoring the quantity associated with the relative distance, in response to determining that the mining machine (100, 300) has lost the network connection to an external safety system (200); and
terminate monitoring of the quantity associated with the relative distance, in response to determining that the mobile mining machine (100, 300) has re-established the network connection to the external safety system (200).

3. The apparatus (700) according to claim 1 or 2, wherein the at least one memory (704) and the computer program code (706) are further configured to, with the at least one processor (702), cause the apparatus to:
overrule a safety configuration configured to cause the apparatus to cause the mining machine (100, 300) to stop when the mining machine (100, 300) has lost the network connection to the external safety system (200).

4. The apparatus (700) according to any of claims 1 to 3, wherein the network connection is configured to be used for communicating a position of the mining machine (100, 300) to the external safety system (200).

5. The apparatus (700) according to any of claims 1 to 4, wherein the at least one memory (704) and the computer program code (706) are further configured to, with the at least one processor (702), cause the apparatus to:
cause the mining machine (100, 300) to slow down, in response to determining that the measured quantity is indicative of the mining machine (100, 300) being located within a second proximity threshold (Th2) from the safety gate (150); and
cause the mining machine (100, 300) to stop, in response to determining that the measured quantity is indicative of the mining machine (100, 300) being located within the proximity threshold from the safety gate (150), wherein the proximity threshold is associated with a position closer to the safety gate (150) than the second proximity threshold (Th2).

6. The apparatus (700) according to any of claims 1 to 5, wherein the quantity comprises a received signal strength of a radio signal communicated between the mining machine (100, 300) and the safety gate (150).

7. The apparatus (700) according to claim 6, wherein the radio signal comprises a short-range wireless communication signal.

8. The apparatus (700) according to claim 6 or 7, wherein the at least one memory (704) and the computer program code (706) are further configured to, with the at least one processor (702), cause the apparatus to:
receive the radio signal from a second apparatus coupled to the safety gate (150).

9. The apparatus (700) according to claim 6 or 7, wherein the at least one memory (704) and the computer program code (706) are further configured to, with the at least one processor (702), cause the apparatus to:
receive the radio signal from a second apparatus coupled to the mining machine (100, 300).

10. The apparatus (700) according to claim 9, wherein the at least one memory (704) and the computer program code (706) are further configured to, with the at least one processor (702), cause the apparatus to:
transmit, to the mining machine (100, 300), a control command to cause the mining machine (100, 300) to slow down or stop.

11. The apparatus (700) according to claim 9 or 10, wherein the second apparatus comprises a wireless communication tag.

12. A mining machine (100, 300) comprising the apparatus according to any of claims 1 to 8.

13. A safety gate (150) comprising the apparatus according to any of claims 1 to 7 or 9 to 11.

14. A method for controlling a mining machine (100, 300), the method comprising:
measuring (801) a quantity associated with a relative distance between the mining machine (100, 300) and a safety gate (150), in response to determining that the mining machine (100, 300) has lost a network connection to an external safety system (200); and
causing (802) the mining machine (100, 300) to slow down or stop, in response to determining that the measured quantity is indicative of the mining machine (100, 300) being located within a proximity threshold (Th1, Th2) from the safety gate (150).

15. A computer program comprising instructions which, when executed by an apparatus, cause the apparatus at least to:
measure a quantity associated with a relative distance between the mining machine (100, 300) and a safety gate (150), in response to determining that the mining machine (100, 300) has lost a network connection to an external safety system (200); and
causing the mining machine (100, 300) to slow down or stop, in response to determining that the measured quantity is indicative of the mining machine (100, 300) being located within a proximity threshold (Th1, Th2) from the safety gate (150).

## Patentansprüche

1. Einrichtung (700) zum Steuern einer Bergbaumaschine (100, 300), wobei die Einrichtung Folgendes umfasst:
mindestens einen Prozessor (702); und
mindestens einen Speicher (704), der Computerprogrammcode (706) einschließt, wobei der mindestens eine Speicher (704) und der Computerprogrammcode (706) dazu konfiguriert sind, mit dem mindestens einen Prozessor (702) die Einrichtung mindestens zu Folgendem zu veranlassen:
Messen einer Größe, die dem relativen Abstand zwischen der Bergbaumaschine (100, 300) und einem Sicherheitstor (150) zugeordnet ist, als Reaktion auf die Bestimmung, dass die Bergbaumaschine (100, 300) eine Netzwerkverbindung zu einem externen Sicherheitssystem (200) verloren hat; und
Veranlassen, dass die Bergbaumaschine (100, 300) verlangsamt oder angehalten wird, als Reaktion auf die Bestimmung, dass die gemessene Größe darauf hindeutet, dass sich die Bergbaumaschine (100, 300) innerhalb einer Annäherungsschwelle (Th1, Th2) vom Sicherheitstor (150) befindet.

2. Einrichtung (700) nach Anspruch 1, wobei der mindestens eine Speicher (704) und der Computerprogrammcode (706) ferner dazu konfiguriert sind, mit dem mindestens einen Prozessor (702) die Einrichtung zu Folgendem zu veranlassen:
Einleiten der Überwachung der dem relativen Abstand zugeordneten Größe, als Reaktion auf die Bestimmung, dass die Bergbaumaschine (100, 300) die Netzwerkverbindung zu einem externen Sicherheitssystem (200) verloren hat; und
Beenden der Überwachung der dem relativen Abstand zugeordneten Größe, als Reaktion auf die Bestimmung, dass die bewegliche Bergbaumaschine (100, 300) die Netzwerkverbindung zum externen Sicherheitssystem (200) wiederhergestellt hat.

3. Einrichtung (700) nach Anspruch 1 oder 2, wobei der mindestens eine Speicher (704) und der Computerprogrammcode (706) ferner dazu konfiguriert sind, mit dem mindestens einen Prozessor (702) die Einrichtung zu Folgendem zu veranlassen:
Außerkraftsetzen einer Sicherheitskonfiguration, die so konfiguriert ist, dass sie die Einrichtung dazu veranlasst, die Bergbaumaschine (100, 300) anzuhalten, wenn die Bergbaumaschine (100, 300) die Netzwerkverbindung zum externen Sicherheitssystem (200) verloren hat.

4. Einrichtung (700) nach einem der Ansprüche 1 bis 3, wobei die Netzwerkverbindung so konfiguriert ist, dass sie zum Übermitteln einer Position der Bergbaumaschine (100, 300) an das externe Sicherheitssystem (200) verwendet wird.

5. Einrichtung (700) nach einem der Ansprüche 1 bis 4, wobei der mindestens eine Speicher (704) und das Computerprogrammcode (706) ferner dazu konfiguriert sind, mit dem mindestens einen Prozessor (702) die Einrichtung zu Folgendem zu veranlassen:
Veranlassen, dass die Bergbaumaschine (100, 300) verlangsamt wird, als Reaktion auf die Bestimmung, dass die gemessene Größe darauf hindeutet, dass sich die Bergbaumaschine (100, 300) innerhalb einer zweiten Annäherungsschwelle (Th2) vom Sicherheitstor (150) befindet; und
Veranlassen, dass die Bergbaumaschine (100, 300) gestoppt wird, als Reaktion auf die Bestimmung, dass die gemessene Größe darauf hinweist, dass sich die Bergbaumaschine (100, 300) innerhalb der Annäherungsschwelle vom Sicherheitstor (150) befindet, wobei die Annäherungsschwelle einer Position zugeordnet ist, die näher am Sicherheitstor (150) liegt als die zweite Annäherungsschwelle (Th2).

6. Einrichtung (700) nach einem der Ansprüche 1 bis 5, wobei die Größe eine empfangene Signalstärke eines zwischen der Bergbaumaschine (100, 300) und dem Sicherheitstor (150) ausgetauschten Funksignals umfasst.

7. Einrichtung (700) nach Anspruch 6, wobei das Funksignal ein drahtloses Kurzstrecken-Kommunikationssignal umfasst.

8. Einrichtung (700) nach Anspruch 6 oder 7, wobei der mindestens eine Speicher (704) und der Computerprogrammcode (706) ferner dazu konfiguriert sind, mit dem mindestens einen Prozessor (702) die Einrichtung zu Folgendem zu veranlassen:
Empfangen des Funksignals von einer zweiten Einrichtung, die mit dem Sicherheitstor (150) gekoppelt ist.

9. Einrichtung (700) nach Anspruch 6 oder 7, wobei der mindestens eine Speicher (704) und der Computerprogrammcode (706) ferner dazu konfiguriert sind, mit dem mindestens einen Prozessor (702) die Einrichtung zu Folgendem zu veranlassen:
Empfangen des Funksignals von einer zweiten Einrichtung, die mit der Bergbaumaschine (100, 300) gekoppelt ist.

10. Einrichtung (700) nach Anspruch 9, wobei der mindestens eine Speicher (704) und der Computerprogrammcode (706) ferner dazu konfiguriert sind, mit dem mindestens einen Prozessor (702) die Einrichtung zu Folgendem zu veranlassen:
Übertragen, an die Bergbaumaschine (100, 300), eines Steuerbefehls, um die Bergbaumaschine (100, 300) zu verlangsamen oder anzuhalten.

11. Einrichtung (700) nach Anspruch 9 oder 10, wobei die zweite Einrichtung ein drahtloses Kommunikations-Tag umfasst.

12. Bergbaumaschine (100, 300), umfassend die Einrichtung nach einem der Ansprüche 1 bis 8.

13. Sicherheitstor (150), umfassend die Einrichtung nach einem der Ansprüche 1 bis 7 oder 9 bis 11.

14. Verfahren zum Steuern einer Bergbaumaschine (100, 300), wobei das Verfahren Folgendes umfasst:
Messen (801) einer Größe, die dem relativen Abstand zwischen der Bergbaumaschine (100, 300) und einem Sicherheitstor (150) zugeordnet ist, als Reaktion auf die Bestimmung, dass die Bergbaumaschine (100, 300) eine Netzwerkverbindung zu einem externen Sicherheitssystem (200) verloren hat; und
Veranlassen (802), dass die Bergbaumaschine (100, 300) verlangsamt oder angehalten wird, als Reaktion auf die Bestimmung, dass die gemessene Größe darauf hinweist, dass sich die Bergbaumaschine (100, 300) innerhalb einer Annäherungsschwelle (Th1, Th2) vom Sicherheitstor (150) befindet.

15. Computerprogramm, das Anweisungen umfasst, die, wenn sie von einer Einrichtung ausgeführt werden, die Einrichtung mindestens zu Folgendem veranlassen:
Messen einer Größe, die dem relativen Abstand zwischen der Bergbaumaschine (100, 300) und einem Sicherheitstor (150) zugeordnet ist, als Reaktion auf die Bestimmung, dass die Bergbaumaschine (100, 300) eine Netzwerkverbindung zu einem externen Sicherheitssystem (200) verloren hat; und
Veranlassen, dass die Bergbaumaschine (100, 300) verlangsamt oder angehalten wird, als Reaktion auf die Bestimmung, dass die gemessene Größe darauf hinweist, dass sich die Bergbaumaschine (100, 300) innerhalb einer Annäherungsschwelle (Th1, Th2) vom Sicherheitstor (150) befindet.

## Revendications

1. Appareil (700) pour commander une machine d'exploitation minière (100, 300), l'appareil comprenant :
au moins un processeur (702) ; et
au moins une mémoire (704) incluant un code de programme informatique (706), la au moins une mémoire (704) et le code de programme informatique (706) étant configurés pour, avec le au moins un processeur (702), amener l'appareil au moins à :
mesurer une quantité associée à une distance relative entre la machine d'exploitation minière (100, 300) et une barrière de sécurité (150), en réponse à la détermination que la machine d'exploitation minière (100, 300) a perdu une connexion réseau à un système de sécurité externe (200) ; et
amener la machine d'exploitation minière (100, 300) à décélérer ou à s'arrêter, en réponse à la détermination que la quantité mesurée indique que la machine d'exploitation minière (100, 300) se trouve dans les limites d'un seuil de proximité (Th1, Th2) de la barrière de sécurité (150).

2. Appareil (700) selon la revendication 1, dans lequel la au moins une mémoire (704) et le code de programme informatique (706) sont en outre configurés pour, avec le au moins un processeur (702), amener l'appareil à :
déclencher la surveillance de la quantité associée à la distance relative, en réponse à la détermination que la machine d'exploitation minière (100, 300) a perdu la connexion réseau à un système de sécurité externe (200) ; et
mettre fin à la surveillance de la quantité associée à la distance relative, en réponse à la détermination que la machine d'exploitation minière mobile (100, 300) a rétabli la connexion réseau au système de sécurité externe (200).

3. Appareil (700) selon la revendication 1 ou 2, dans lequel la au moins une mémoire (704) et le code de programme informatique (706) sont en outre configurés pour, avec le au moins un processeur (702), amener l'appareil à :
passer outre une configuration de sécurité configurée pour amener l'appareil à provoquer l'arrêt de la machine d'exploitation minière (100, 300) lorsque la machine d'exploitation minière (100, 300) perd la connexion réseau au système de sécurité externe (200).

4. Appareil (700) selon l'une quelconque des revendications 1 à 3, dans lequel la connexion réseau est configurée pour servir à communiquer une position de la machine d'exploitation minière (100, 300) au système de sécurité externe (200).

5. Appareil (700) selon l'une quelconque des revendications 1 à 4, dans lequel la au moins une mémoire (704) et le code de programme informatique (706) sont en outre configurés pour, avec le au moins un processeur (702), amener l'appareil à :
amener la machine d'exploitation minière (100, 300) à décélérer, en réponse à la détermination que la quantité mesurée indique que la machine d'exploitation minière (100, 300) se trouve dans les limites d'un second seuil de proximité (Th2) de la barrière de sécurité (150) ; et
amener la machine d'exploitation minière (100, 300) à s'arrêter, en réponse à la détermination que la quantité mesurée indique que la machine d'exploitation minière (100, 300) se trouve dans les limites du seuil de proximité de la barrière de sécurité (150), dans lequel le seuil de proximité est associé à une position plus proche de la barrière de sécurité (150) que le second seuil de proximité (Th2).

6. Appareil (700) selon l'une quelconque des revendications 1 à 5, dans lequel la quantité comprend la force de signal reçu d'un signal radio communiqué entre la machine d'exploitation minière (100, 300) et la barrière de sécurité (150).

7. Appareil (700) selon la revendication 6, dans lequel le signal radio comprend un signal de communication sans fil à courte portée.

8. Appareil (700) selon la revendication 6 ou 7, dans lequel la au moins une mémoire (704) et le code de programme informatique (706) sont en outre configurés pour, avec le au moins un processeur (702), amener l'appareil à :
recevoir le signal radio d'un second appareil couplé à la barrière de sécurité (150).

9. Appareil (700) selon la revendication 6 ou 7, dans lequel la au moins une mémoire (704) et le code de programme informatique (706) sont en outre configurés pour, avec le au moins un processeur (702), amener l'appareil à :
recevoir le signal radio d'un second appareil couplé à la machine d'exploitation minière (100, 300).

10. Appareil (700) selon la revendication 9, dans lequel la au moins une mémoire (704) et le code de programme informatique (706) sont en outre configurés pour, avec le au moins un processeur (702), amener l'appareil à :
transmettre une instruction de commande à la machine d'exploitation minière (100, 300) afin que la machine d'exploitation minière (100, 300) décélère ou s'arrête.

11. Appareil (700) selon la revendication 9 ou 10, dans lequel le second appareil comprend une étiquette de communication sans fil.

12. Machine d'exploitation minière (100, 300) comprenant l'appareil selon l'une quelconque des revendications 1 à 8.

13. Barrière de sécurité (150) comprenant l'appareil selon l'une quelconque des revendications 1 à 7 ou 9 à 11.

14. Procédé de commande d'une machine d'exploitation minière (100, 300), le procédé comprenant :
la mesure (801) d'une quantité associée à une distance relative entre la machine d'exploitation minière (100, 300) et une barrière de sécurité (150), en réponse à la détermination que la machine d'exploitation minière (100, 300) a perdu une connexion réseau à un système de sécurité externe (200) ; et
le fait d'amener (802) la machine d'exploitation minière (100, 300) à décélérer ou à s'arrêter, en réponse à la détermination que la quantité mesurée indique que la machine d'exploitation minière (100, 300) se trouve dans les limites d'un seuil de proximité (Th1, Th2) de la barrière de sécurité (150).

15. Programme informatique comprenant des instructions qui, lorsqu'elles sont exécutées par un appareil, amènent l'appareil au moins à :
mesurer une quantité associée à une distance relative entre la machine d'exploitation minière (100, 300) et une barrière de sécurité (150), en réponse à la détermination que la machine d'exploitation minière (100, 300) a perdu une connexion réseau à un système de sécurité externe (200) ; et
amener la machine d'exploitation minière (100, 300) à décélérer ou à s'arrêter, en réponse à la détermination que la quantité mesurée indique que la machine d'exploitation minière (100, 300) se trouve dans les limites d'un seuil de proximité (Th1, Th2) de la barrière de sécurité (150).
